# EUROPEAN PATENT APPLICATION

(11) **EP 4 184 204 A1**
(43) Date of publication of application: **24.05.2023**
(21) Application number: 22208686.0
(22) Date of filing: 22.11.2022
(51) Int. Cl.: G01S 7/487, G01S 7/497, G01S 17/86, G01S 17/89, G01S 17/931

(54) **METHODS AND SYSTEMS FOR REDUCING LIDAR MEMORY LOAD**

(30) Priority: 22.11.2021 US 202163264427 P
(71) Applicant: TuSimple, Inc., San Diego, CA 92122 (US)
(72) Inventor: HAN, Xiaoling, San Diego, 92122 (US); PAN, Yue, San Diego, 92122 (US); GONG, Zhiqi, San Diego, 92122 (US)
(74) Representative: Morrall, Jonathan Ian McLachlan

(57) **Abstract**

Techniques are described for reducing the memory load associated with point cloud data. An example method includes transmitting a light pulse, detecting, by a light detector, a plurality of returns of the light pulse, producing a point cloud comprising a plurality of points associated with the plurality of returns, and generating a reduced set of points associated with the plurality of returns by removing a subset of the plurality of points from the point cloud. The reduced set of points can then be used by autonomous vehicle systems to efficiently map a surrounding environment without significantly reducing accuracy.

## Description

### CROSS-REFERENCE TO RELATED APPLICATION

This application claims the benefit of U.S. Provisional Patent Application No. 63/264,427, filed November 22, 2021, which is incorporated by reference herein in its entirety.

### TECHNICAL FIELD

This document relates to reducing memory load for processing point cloud data of autonomous vehicles.

### BACKGROUND

For autonomous vehicles to travel safely and avoid collisions with other vehicles, pedestrians, and other obstacles, the vehicle should map its surrounding environment quickly and accurately. To map the surrounding environment, many autonomous vehicles use a combination of detectors, including one or more light detection and ranging ("LIDAR") detectors. LIDAR detectors use rapidly pulsed lasers to map the surrounding environment and are generally faster and more accurate compared to other detectors, such as sonar and radar detectors. Computers onboard the autonomous vehicle must process this LIDAR data quickly without sacrificing accuracy so the vehicle can react as needed while driving.

### SUMMARY

Aspects of the present document relate to methods, apparatuses, and/or systems for reducing memory load associated with point cloud data.

In some embodiments, a method comprises transmitting a light pulse; detecting, by a light detector, a plurality of returns of the light pulse; producing a plurality of points associated with the plurality of returns in a point cloud; and generating a reduced set of points associated with the plurality of returns by removing a subset of the plurality of points from the point cloud.

In some embodiments a system comprises a device configured to transmit a light pulse, and receive a plurality of returns associated with the light pulse. The system further comprises a computer including a processor and a memory storing instructions that when executed by the processor, cause the processor to produce a plurality of points associated with the plurality of returns in a point cloud and generate a reduced set of points by removing a subset of the plurality of points from the point cloud.

In some embodiments, a non-transitory computer-readable medium is disclosed. The non-transitory computer-readable medium stores instructions that when executed by a processor, causes the processor to produce a plurality of points in a point cloud, the plurality of points associated with a plurality of returns of a single LIDAR pulse. The instructions further cause the processor to generate a reduced point cloud by removing a subset of the plurality of points from the point cloud.

Various other aspects, features, and advantages will be apparent through the detailed description and the drawings attached hereto.

### BRIEF DESCRIPTION OF THE DRAWINGS

FIG. 1 shows a block diagram of a system including an autonomous vehicle in accordance with embodiments of the present disclosure.
FIG. 2 shows an environment where an autonomous vehicle is driving on a road in accordance with embodiments of the present disclosure.
FIG. 3A shows an overhead view of a system that can be used to reduce memory load in accordance with embodiments of the present disclosure.
FIG. 3B shows a system that can be used as part of camera calibration process in accordance with embodiments of the present disclosure.
FIG. 4 is a flow chart illustrating a method of reducing memory load in accordance with an embodiment of the present disclosure.

### DETAILED DESCRIPTION

Disclosed here are methods and systems that allow embodiments to, among other things, reduce the memory load of data associated with LIDAR devices by eliminating excess data points associated with the same LIDAR pulse.

LIDAR devices rely on transmission and detection of laser pulses to map a surrounding environment. The processing of received pulses produces a large amount of data, which is used to form a three-dimensional ("3D") point cloud. For example, current LIDAR devices can emit hundreds of thousands or millions of pulses per second, which can correspond to tens of megabytes per second of raw data. Taking parsing overhead into account, this can require systems to process hundreds of megabytes of data per second.

LIDAR systems may return multiple data points from a single pulse due divergence of the laser, which reflects off various objects in the environment, such as traffic signs or foliage, which increases the memory needed to process LIDAR data to form an image of the environment. For example, a single LIDAR pulse directed toward a tree may be partially reflected from multiple layers of branches, leaves, etc., thereby causing multiple reflections, known as "returns," to be detected for the same pulse. Each return can be recorded as a separate data point in the point cloud, which can waste computational resources because the multiple returns often do not provide additional useful information regarding the environment. For example, multiple returns are often reflections off the same surface or can correspond to coordinates that are nearly identical. Thus, removing excess data points from multiple returns of the same light pulse can reduce the memory and runtime needed to process the point cloud data.

In addition, many LIDAR devices are configured to map a large area surrounding the device. For example, a spinning LIDAR unit can emit laser pulses and generate point cloud data while spinning 360 degrees about an axis of rotation. But in some applications, a 360-degree point cloud may not be needed. For example, camera fusion is a technique that uses LIDAR point cloud data in conjunction with a camera to improve robustness and accuracy compared to a LIDAR alone. In this case, savings may be obtained by only processing point cloud data that corresponds to a field of view of the camera. Having a large amount of unnecessary data can result in an increased latency, which can be crucial for a fast-moving autonomous vehicle. However, removing too much point cloud data can decrease accuracy of the imaged environment, which can also be dangerous in applications such as autonomous vehicles. The techniques described herein may be used by embodiments to correlate a phase range of a LIDAR detector with a field of view of a camera and to remove points that do not fall within the phase range, which can help optimize the set of points used for processing.

In this patent document, the abbreviations "LiDAR" or "LIDAR" are used to refer to light detection and ranging devices and methods, and alternatively, or additionally, laser detection and ranging devices and methods. The use of these acronyms does not imply limitation of the described devices, systems, or methods to the use of one over the other.

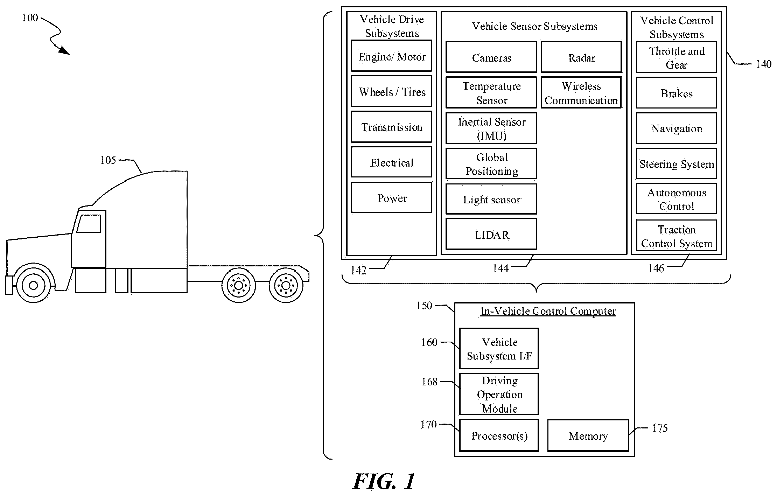

FIG. 1 shows a block diagram of a system 100 including an autonomous vehicle 105 in accordance with embodiments of the present disclosure. As shown in FIG. 1, the autonomous vehicle 105 may be a semi-trailer truck. The system 100 may include several subsystems and components that can generate and/or deliver one or more sources of information/data and related services to the in-vehicle control computer 150 that may be located in the autonomous vehicle 105. The in-vehicle control computer 150 can be in data communication with a plurality of vehicle subsystems 140, all of which can be resident in the autonomous vehicle 105. A vehicle subsystem interface 160 is provided to facilitate data communication between the in-vehicle control computer 150 and the plurality of vehicle subsystems 140. In some embodiments, the vehicle subsystem interface 160 can include a controller area network (CAN) controller to communicate with devices in the vehicle subsystems 140.

The autonomous vehicle 105 may include various vehicle subsystems that support of the operation of the autonomous vehicle 105. The vehicle subsystems may include a vehicle drive subsystem 142, a vehicle sensor subsystem 144, and/or a vehicle control subsystem 146. The components or devices of the vehicle drive subsystem 142, the vehicle sensor subsystem 144, and the vehicle control subsystem 146 as shown as examples. The vehicle drive subsystem 142 may include components operable to provide powered motion for the autonomous vehicle 105. In an example embodiment, the vehicle drive subsystem 142 may include an engine or motor, wheels/tires, a transmission, an electrical subsystem, and a power source.

The vehicle sensor subsystem 144 may include a number of sensors configured to sense information about an environment in which the autonomous vehicle 105 is operating or a condition of the autonomous vehicle 105. The vehicle sensor subsystem 144 may include one or more cameras or image capture devices, one or more temperature sensors, an inertial measurement unit (IMU), a Global Positioning System (GPS) transceiver, one or more laser range finder/LIDAR units, one or more RADAR units, and/or a wireless communication unit (e.g., a cellular communication transceiver). The vehicle sensor subsystem 144 may also include sensors configured to monitor internal systems of the autonomous vehicle 105 (e.g., an O₂ monitor, a fuel gauge, an engine oil temperature, etc.,). In some embodiments, the vehicle sensor subsystem 144 may include sensors in addition to the sensors shown in FIG. 1.

The IMU may include any combination of sensors (e.g., accelerometers and gyroscopes) configured to sense position and orientation changes of the autonomous vehicle 105 based on inertial acceleration. The GPS transceiver may be any sensor configured to estimate a geographic location of the autonomous vehicle 105. For this purpose, the GPS transceiver may include a receiver/transmitter operable to provide information regarding the position of the autonomous vehicle 105 with respect to the Earth. The RADAR unit may represent a system that utilizes radio signals to sense objects within the environment in which the autonomous vehicle 105 is operating. In some embodiments, in addition to sensing the objects, the RADAR unit may additionally be configured to sense the speed and the heading of the objects proximate to the autonomous vehicle 105. The laser range finder or LIDAR unit may be any sensor configured to sense objects in the environment in which the autonomous vehicle 105 is located using lasers. The cameras may include one or more cameras configured to capture a plurality of images of the environment of the autonomous vehicle 105. The cameras may be still image cameras or motion video cameras.

The vehicle control subsystems 146 may be configured to control operation of the autonomous vehicle 105 and its components. Accordingly, the vehicle control subsystem 146 may include various elements such as a throttle and gear, a brake unit, a navigation unit, a steering system and/or an autonomous control unit. The throttle may be configured to control, for instance, the operating speed of the engine and, in turn, control the speed of the autonomous vehicle 105. The gear may be configured to control the gear selection of the transmission. The brake unit can include any combination of mechanisms configured to decelerate the autonomous vehicle 105. The brake unit can use friction to slow the wheels in a standard manner. The brake unit may include an Anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the GPS transceiver and one or more predetermined maps so as to determine the driving path for the autonomous vehicle 105. The steering system may represent any combination of mechanisms that may be operable to adjust the heading of autonomous vehicle 105 in an autonomous mode or in a driver-controlled mode.

The autonomous control unit may represent a control system configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some embodiments, the autonomous control unit may be configured to incorporate data from the GPS transceiver, the RADAR, the LIDAR, the cameras, and/or other vehicle subsystems to determine the driving path or trajectory for the autonomous vehicle 105.

The traction control system (TCS) may represent a control system configured to prevent the autonomous vehicle 105 from swerving or losing control while on the road. For example, TCS may obtain signals from the IMU and the engine torque value to determine whether it should intervene and send instruction to one or more brakes on the autonomous vehicle 105 to mitigate the autonomous vehicle 105 swerving. TCS is an active vehicle safety feature designed to help vehicles make effective use of traction available on the road, for example, when accelerating on low-friction road surfaces. When a vehicle without TCS attempts to accelerate on a slippery surface like ice, snow, or loose gravel, the wheels can slip and can cause a dangerous driving situation. TCS may also be referred to as electronic stability control (ESC) system.

Many or all of the functions of the autonomous vehicle 105 can be controlled by the in-vehicle control computer 150. The in-vehicle control computer 150 may include at least one processor 170 (which can include at least one microprocessor) that executes processing instructions stored in a non-transitory computer readable medium, such as the memory 175. The in-vehicle control computer 150 may also represent a plurality of computing devices that may serve to control individual components or subsystems of the autonomous vehicle 105 in a distributed fashion. In some embodiments, the memory 175 may contain processing instructions (e.g., program logic) executable by the processor 170 to perform various methods and/or functions of the autonomous vehicle 105.

The processor 170 can execute the operations associated with eliminating or reducing excess data points. For example, multiple returns can be detected at the light sensor at the vehicle sensor subsystem 144, where each of these returns are associated with a LIDAR pulse emitted from the LIDAR unit of the vehicle sensor subsystem 144. Similarly, other light pulses, such as those emitted from the radar of vehicle sensor subsystem 144 can also result in multiple returns. The operations executed by the processor 170 will be explained in more detail below. In some embodiments, images captured by the camera of vehicle sensor subsystem 144 can be also used to reduce excess data points produced from LIDAR or other light pulses.

The memory 175 may contain additional instructions as well, including instructions to transmit data to, receive data from, interact with, or control one or more of the vehicle drive subsystem 142, the vehicle sensor subsystem 144, and the vehicle control subsystem 146. The in-vehicle control computer 150 may control the function of the autonomous vehicle 105 based on inputs received from various vehicle subsystems (e.g., the vehicle drive subsystem 142, the vehicle sensor subsystem 144, and the vehicle control subsystem 146).

### Multiple Returns

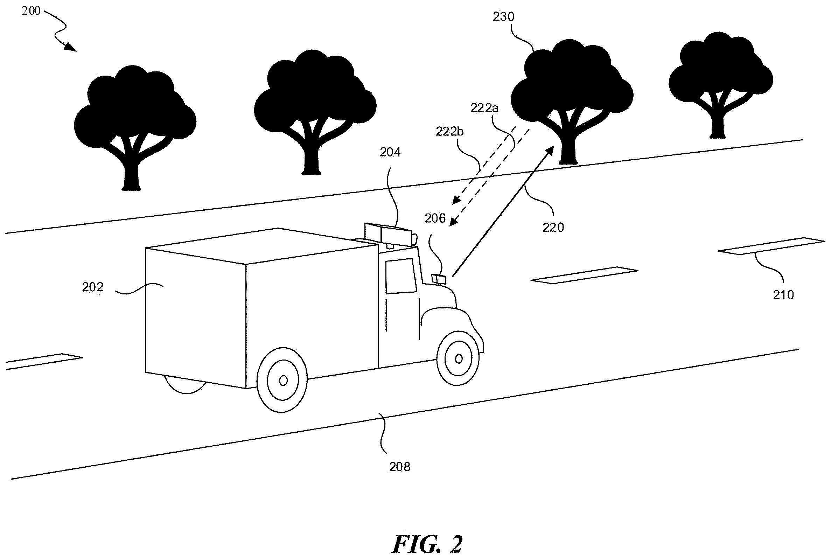

FIG. 2 shows an environment 200 where an autonomous vehicle 202 is driving on a road 208, in accordance with embodiments of the present disclosure. The lane in which the autonomous vehicle 202 is driven includes lane markers 210 The autonomous vehicle 202, e.g., the autonomous vehicle 105 depicted in FIG. 1, may include a camera 204 and a LIDAR unit 206 with which an onboard computer can use to map the environment 200, such as in a point cloud. The LIDAR unit 206 can include components that emit light and sensors that detect and measure reflections of the emitted light. For example, the LIDAR unit 206 can be a spinning LIDAR that emits a laser as it rotates about an axis. The LIDAR unit 206 can also be a solid-state unit that steers a beam using phased arrays or a micro-electromechanical system (MEMS). The camera 204 and/or the LIDAR unit 206 are shown in front of the autonomous vehicle 202, but techniques described in this document can apply to other positions, such as rear cameras, top mounted LIDAR, etc.

The LIDAR unit 206 can emit a light pulse 220, such as a laser pulse. The light pulse 220 can reflect off a surface in the environment 200, such as an object 230. When the light pulse 220 hits the object 230, the light pulse 220 can be partially reflected as a first return 222a toward the LIDAR unit 206. A portion of the light pulse 220 which is not reflected is then reflected off a different portion of the object 230 to produce a second return 222b, which is detected by a sensor of LIDAR unit 206. Additional returns can be similarly generated and detected by the LIDAR unit 206, depending on the structure of the object 230, strength of the light pulse 220, sensitivity of the detector in LIDAR unit 206, conditions of the environment 200, etc. The returns 222a-b can be discrete returns or can be determined from waveform measurements, e.g., by determining intensity peaks of a measured waveform. Furthermore, although FIG. 2 shows two returns 222a-b, a light pulse 220 can result in a greater number of returns, such as three or more returns.

The returns 222a-b can each be recorded as separate points in a point cloud, for example by determining distance with a time-of-flight calculation. However, the LIDAR unit 206 can emit hundreds of thousands of light pulses 220 per second, resulting in a large number of data points in the point cloud. In some embodiments, the LIDAR unit 206 may produce about 700,000 points per second. Embodiments of the present invention describe various return modes that can remove a subset of points in the point cloud to produce a reduced set of points, which reduces the memory load associated with processing the point cloud without significantly affecting accuracy.

In some embodiments, a reduced set of points can be generated by selecting a strongest return of multiple returns. The points corresponding to the remaining returns can then be removed from the point cloud. The strongest return can be the return with the highest intensity among multiple returns. For example, referring to FIG. 2, the first return 222a and the second return 222b can both be returns from the light pulse 220. If the first return 222a has a higher intensity, then only the data point associated with the first return 222a is kept for the reduced set of points, and the data point associated with the second return 222b is discarded. In some embodiments, more than one strongest return can be selected, such as selecting the two or more returns with the highest intensity, provided that the total number of returns associated with the light pulse 220 is large enough.

In some embodiments, a reduced set of points can be generated by selecting a latest return and discarding points in the point cloud not associated with the latest return. The latest return can be determined by a timestamp associated with each return detected by the LIDAR unit 206. For example, if the second return 222b has a later timestamp than the first return 222a, then the point in the point cloud associated with the second return 222b can be kept and the data point associated with the first return 222a can be discarded. In some embodiments, more than one latest return can be selected, or an earliest or first return can be selected.

Whether to select a strongest return or to select a latest return for a given light pulse 220 can depend on physical properties of the environment 200 and of objects within it. For instance, objects with high reflectivity, such as traffic signs in a sunny environment, can reflect light from a distance and produce "ghost points" in the LIDAR point cloud. For example, sunlight reflecting off an octagonal STOP sign can produce an octagonal glare, which can be detected by the LIDAR unit 206 and appear as an octagonal object in the point cloud. Because ghost objects can result from high intensity reflections, selecting a return 222a-b with the highest intensity may result in selecting a ghost point, while selecting latest returns may reduce this ghosting effect.

An autonomous vehicle can select a return mode based on reflectivity as follows. First, the vehicle can determine a reflectivity associated with the returns 222. For example, the LIDAR unit 206 can measure the intensity of each return 222a-b that reflects off a surface in the environment 200, such as object 230. The higher intensity of the returns 222a-b can correspond to a higher reflectivity of the surface. If the reflectivity associated with returns 222a or 222b are above a threshold value, then the autonomous vehicle can select a latest return for the reduced set of points. Similarly, if the reflectivity is below a threshold value, then a strongest return can be selected. The reflectivity threshold can be adjusted based on environmental conditions, such as ambient brightness, weather, etc. For example, a higher ambient brightness can correspond to a higher threshold reflectivity

In some embodiments, a latest return can be selected by default, and a strongest return mode can be used instead based on environmental conditions. For example, an autonomous vehicle such an autonomous truck that primarily operates on highways, a latest return can be selected by default due to the prevalence of high reflectivity highway signs and road markers. The autonomous truck can switch to using a strongest return mode when entering an environment with lower reflectivity. In some embodiments, the autonomous driving system can implement both a strongest return mode and a latest return mode.

In some embodiments, a ghost object can be identified based on persistence of the detected object. For example, a ghost object may only be detected temporarily due to changes in lighting as the vehicle travels, in contrast to an object that is physically present in the environment 200. Thus, point cloud data corresponding to certain features can be tracked at different points in time to identify ghost points.

A reduced set of points can also be generated by selecting groups of points in the point cloud based on the coordinates of the group of points. For example, a group of points can be identified if their coordinates are within a threshold distance of each other in the point cloud. The threshold distance can correspond to a resolution of a detector, such as the LIDAR unit 206. For example, the threshold distance can be approximately 0.1 cm. Multiple points that are located within a small distance from each other in the point cloud can waste computational resources because fine resolution of the environment is often not needed to navigate an autonomous vehicle.

The group of points can then be reduced by deleting a subset of the group. The group of points can all correspond to returns from the same light pulse. For example, the first return 222a and the second return 222b associated with the light pulse 220 can correspond to point cloud data, in this case a pair of points, within a threshold distance. After identifying this pair, the data corresponding to either the first return 222a or the second return 222b can be removed from the point cloud. A LIDAR unit 206 which removes data associated with a one point of a pair of points can be said to operate in a "dual return" mode. In other examples, there can be three, four, or more points in a given group of points if their coordinates are within a threshold distance. The points in a group of points can be removed randomly and/or based on various criteria. For example, points associated with the latest or strongest return among the group can be kept in the point cloud, as described above.

In some embodiments, groups of points can be selected in conjunction with the strongest return mode and/or the latest return mode. For example, first return 222a can be a strongest return and second return 222b can be a latest return. Both of the corresponding points can be kept in the point cloud, or either point can be removed. If the points associated with first return 222a and second return 222b are within a threshold distance of each other, then one of the associated points can be removed from the point cloud. If the two points are not within the threshold distance, then it may be desired to map both points in the point cloud to produce a more accurate map of the environment.

In some embodiments, the selection of points from multiple returns can be dynamically configured by configuring the LIDAR unit 206. For example, the LIDAR unit 206 can be configured to operate using any of the modes described above, such as the strongest return, latest return, first return, or dual return modes, and switch between the modes in different situations. For example, as described above, the LIDAR unit 206 can be configured to operate in a latest return mode in environments with multiple high reflectivity surfaces, and switch to a strongest return mode in other environments. The LIDAR unit 206 can then selectively return points that are associated with its current return mode. In some embodiments, the LIDAR unit 206 can dynamically switch between different return modes according to a machine learning model.

In some embodiments, the selection of points can be performed in post processing. In this case, the LIDAR unit 206 can return all points associated with multiple returns, rather than being configured in a return mode. Then a reduced set of points can be selected from the returned points in post processing. For example, points associated with a latest return can be selected, and the remaining points returned by the LIDAR unit 206 can be discarded or removed. Similarly, points associated with the strongest return, first return, or groups of points within a threshold distance can be selected.

### Camera-LIDAR Phase Matching

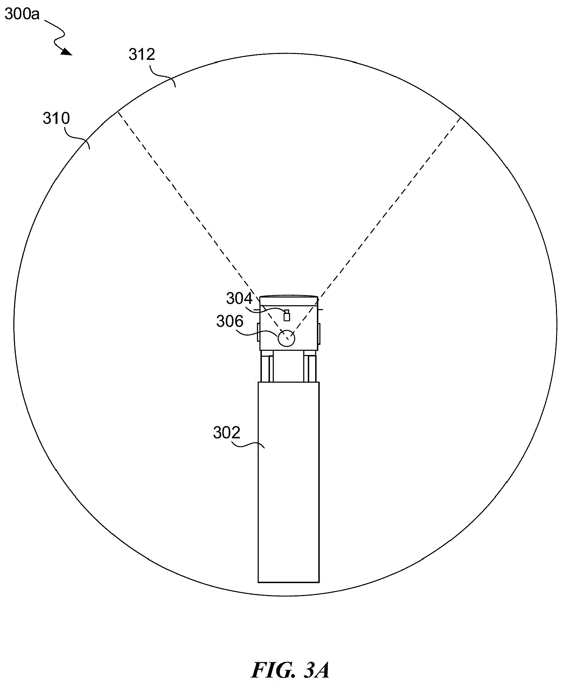

FIG. 3A shows an overhead view of a system 300a that can be used to reduce memory load in accordance with embodiments of the present disclosure. An autonomous vehicle 302, e.g., the autonomous vehicle 105 depicted in FIG. 1, can include a camera 304 and a LIDAR unit 306. The autonomous vehicle 302, camera 304, and LIDAR unit 306 can be similar to the autonomous vehicle 202, camera 204, and LIDAR unit 206 shown in FIG. 2. Point cloud data generated by measurements from the LIDAR unit 306 can be correlated with images captured by the camera 304. This correlation can be used to reduce memory usage by eliminating data points which are not correlated with images from the camera 304. For example, the camera 304 can capture an image of an environment, and points in the point cloud which are not in the environment captured by the camera 304 can be removed. Removing point cloud data in this manner can be advantageous in applications where only a segment of the point cloud is needed. For example, for camera fusion, only point cloud data corresponding to the field of view of the camera may be needed, and processing the entire point cloud would be a waste of resources.

In some embodiments, the LIDAR unit 306 can be a spinning LIDAR unit that rotates 360 degrees about an axis. The rotational phase of a spinning LIDAR unit 306 can be correlated with a field of view or angle of view of the camera 304. For example, a front-facing camera 304 with a wide angle of view can correlate to a rotational phase range of about -90 to 90 degrees relative to the forward direction. Accordingly, data points collected by the LIDAR unit 306 associated with returns outside this phase range are not within the environment captured by the camera 304 and can be removed from the point cloud. For example, as shown in FIG. 3A, the area 310 corresponds to a 360-degree field of view detectable by the LIDAR unit 306. The area 312 can correspond to the field of view of the camera 304. By correlating the rotational phase of the LIDAR unit 306 with the field of view of the camera 304, the system 300a can select data points from the area 312 and exclude or remove data points outside the area 312. The area 312 can vary in size according to the desired phase range. For example, a camera 304 with a narrower angle of view can be correlated with a smaller phase range of the LIDAR unit 306, such as -60 to 60 degrees, -50 to 50 degrees, -40 to 40 degrees, etc. Similarly, a correlation can be determined for rear-facing cameras and side cameras by shifting ranges.

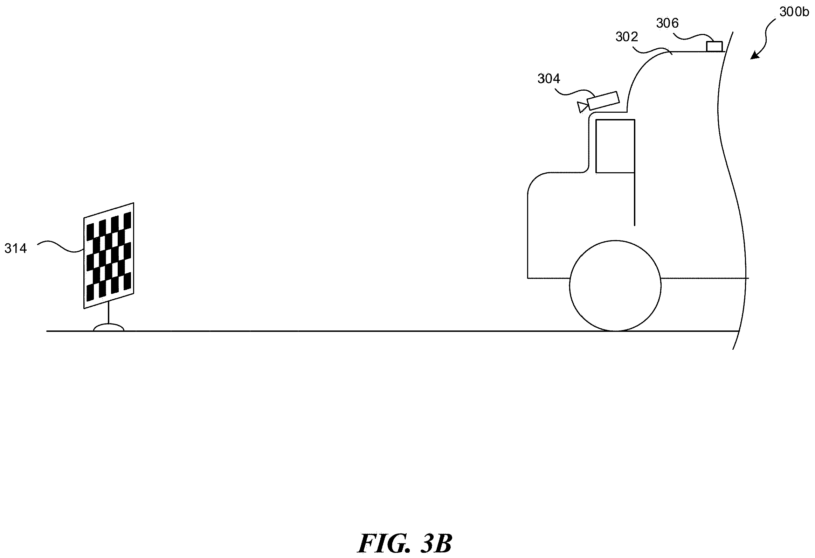

FIG. 3B shows a system 300b that can be used as part of camera calibration process in accordance with embodiments of the present disclosure. A determination of the phase range described above can be achieved by a camera calibration process, as shown in FIG. 3B. The camera 304 can capture an image of an environment including the target object 314. Feature extraction can be performed to extract the target object 314 from the surrounding environment. As shown in FIG. 3B, the target object 314 can be a board with a black and white checkerboard pattern. For a single camera 304, the image can be a two-dimensional image. In addition, the LIDAR unit 306 can map the target object 314. By placing the target object 314 a known distance from the camera 304, a computer onboard the autonomous vehicle 302 can calculate a set of 3-D coordinates that map to pixels of the 2-D image captured by the camera that correspond to the target object 314. This mapping can thus be used to project the 3-D point cloud collected by the LIDAR unit 306 into two dimensions. Data points collected by the LIDAR unit 306 can be associated with a rotational phase, e.g., in metadata or by calculation using coordinate data. Thus, a phase range corresponding to the camera image can be precisely determined by identifying which point cloud data are projected onto the image captured by camera 304 and determining their associated phases. The phase range can be used to filter or remove point cloud data outside of the phase range, as described above. The reduced set of points can then be used for camera fusion and other applications which may not require 360-degree point cloud data. By determining phase ranges in advance using a calibration process, latency from processing camera images and determining phase ranges can be avoided while the autonomous vehicle 302 drives itself.

In some embodiments, the memory usage associated with processing a point cloud can be further reduced by using camera-LIDAR phase matching and removing points associated with multiple returns of a single light pulse, as described in the "Multiple Returns" section above. For example, a phase range can be determined using the calibration process described with reference to FIG. 3B. Point cloud data outside this phase range can be removed to produce a reduced set of points. Of this reduced set of points, those points associated with a strongest return of multiple returns from a single light pulse can be used to produce a further reduced set of points. Similarly, points associated with a latest return or groups of points within a threshold distance can also be selected. Note that point cloud data need not be modified in this order. For example, point cloud data associated with multiple returns can be removed prior to, or simultaneously with, point cloud data outside a phase range corresponding to a camera.

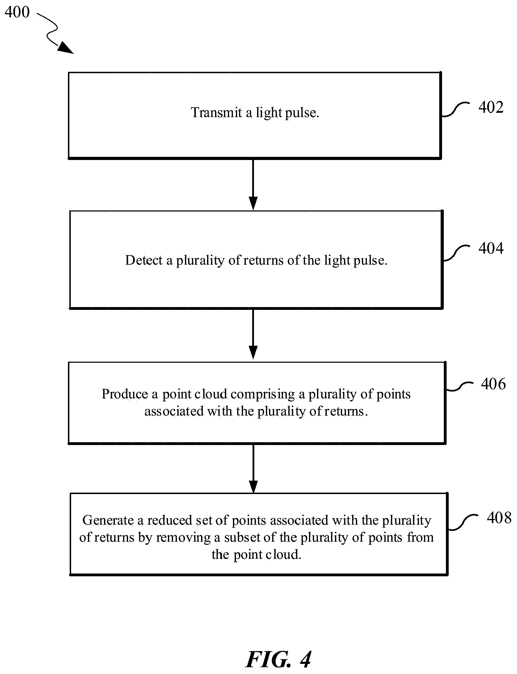

FIG. 4 is a flow chart illustrating a method 400 of reducing memory load in accordance with an embodiment of the present disclosure. At 402, a light pulse is transmitted. For example, the light pulse can be a laser pulse transmitted by light detector, such as a LIDAR unit. The light pulse can be transmitted into an environment, e.g., environment 200 of FIG. 2 surrounding an autonomous vehicle, e.g., the autonomous vehicle 105 of FIG. 1 or the autonomous vehicle 202 of FIG. 2. At 404, a plurality of returns of the light pulse are detected. The plurality of returns can be reflections off one or more surfaces in the environment of the light pulse transmitted at 402. The returns can be detected at 404 by a light detector of an autonomous vehicle, such as a detector integrated into the LIDAR unit that transmitted the light pulse at 402. The plurality of returns can be discrete returns or correspond to intensity peaks of a waveform. At 406, a point cloud comprising a plurality of points associated with the plurality of returns are produced. For example, each return from the same light pulse transmitted at 402 can be associated with a separate point in the point cloud.

At 408, a reduced set of points associated with the plurality of returns is generated by removing a subset of the plurality of points from the point cloud. In some embodiments, the subset of the plurality of points can be removed by selecting a strongest return among the multiple returns and removing points associated with the weaker returns. In some embodiments, the subset of the plurality of points can be removed by selecting a latest return among the multiple returns and removing points associated with the earlier returns. In some embodiments, the subset of the plurality of points can be removed by identifying a group of points associated with the multiple returns that are within a threshold distance of each other, and removing one or more points of the group of points. In some embodiments, the subset of the plurality of points can be removed based on determining that an angle of the associated returns falls outside a threshold range. For example, the threshold range can correspond to a field of view of a camera of an autonomous vehicle.

The reduced set of points generated at 408 can be processed and transmitted for use in various imaging, sensing, and other applications. For example, the reduced set of points can subsequently be used to detect an object and thus construct an environment for autonomous vehicles with less latency compared to unreduced point clouds. This reduced latency can be advantageous when detecting objects and mapping the environment while navigating an autonomous vehicle, such as being input to a simultaneous localization and mapping (SLAM) algorithm. As would be understood, being able to detect objects and map an environment quickly and efficiently is particularly beneficial for autonomous vehicles, as such functions are closely tied to the safety of the vehicle. Therefore, detecting objects quickly and efficiently improves the safety of an autonomous vehicle. Computers of the autonomous vehicle can also use reduced point cloud data for object detection and object classification and to train detection and classification models. The reduced set of points can be used in combination with data from other sensors onboard an autonomous vehicle, such as cameras, radar, GPS, or other sensors (such as those included in vehicle sensor subsystems 144 in FIG. 1). Any pre-processing that is performed on point cloud data is also more efficient as a result of the reduced size. Note that these are illustrative examples and that reduced set of points can generally be used for any applications configured to process or use point cloud data.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

From the foregoing, it will be appreciated that specific embodiments of the invention have been described herein for purposes of illustration, but that various modifications may be made without deviating from the scope of the invention. Accordingly, the invention is not limited except as by the appended claims.

Also disclosed herein are the following numbered clauses:
1. A method comprising:
   transmitting a light pulse;
   detecting, by a light detector, a plurality of returns of the light pulse;
   producing a point cloud comprising a plurality of points associated with the plurality of returns; and
   generating a reduced set of points associated with the plurality of returns by removing a subset of the plurality of points from the point cloud.
2. The method of clause 1, wherein the removing the subset of the plurality of points comprises:
   selecting a strongest return of the plurality of returns having a highest intensity of the plurality of returns; and
   removing, from the point cloud, points of the plurality of points not associated with the strongest return.
3. The method of clause 1, wherein the removing the subset of the plurality of points comprises:
   selecting a latest return of the plurality of returns having a latest timestamp of the plurality of returns; and
   removing, from the point cloud, points of the plurality of points not associated with the latest return.
4. The method of clause 1, wherein the removing the subset of the plurality of points comprises:
   selecting pairs of points of the plurality of points that are within a threshold distance from each other; and
   removing, from the point cloud, one point of each of the selected pairs of points.
5. The method of clause 4, wherein the threshold distance is less than or equal to 1 millimeter.
6. The method of clause 1, further comprising:
   capturing, by a camera, an image;
   determining whether any points of the point cloud are located within an environment associated with the image; and
   removing, from the point cloud, points of the point cloud that are not within the environment associated with the image.
7. The method of clause 6, wherein the image comprises a two dimensional image, and the method further comprises:
   generating a mapping between a three dimensional set of target points and the two dimensional image,
   wherein the determining that any points of the point cloud within the environment associated with the image includes:
      projecting the points of the point cloud into the two dimensional image based on a mapping between the three dimensional set of target points and the two dimensional image.
8. The method of clause 7, wherein the two dimensional image includes a target object, and wherein the mapping is generated based on extracted features of the target object.
9. The method of clause 6, wherein the determining that any points of the point cloud are within the environment associated with the image comprises:
   determining, based on an angle associated with each of the points of the point cloud, the points of the point cloud are within a field of view of the camera.
10. The method of clause 6, wherein the camera comprises a front-facing camera of an autonomous vehicle, and the light detector comprises a LIDAR unit.
11. A system comprising:
   a device configured to:
      transmit a light pulse, and
      receive a plurality of returns associated with the light pulse; and
   a computer including at least one processor and a memory storing instructions that when executed by the at least one processor, cause the at least one processor to:
      produce a point cloud comprising a plurality of points associated with the received plurality of returns, and
      generate a reduced set of points by removing, from the point cloud, a subset of the plurality of points.
12. The system of clause 11, further comprising:
   a target calibration object; and
   a camera configured to obtain an image including the target calibration object,
   wherein the instructions further cause the at least one processor to:
      capture the image including the target calibration object;
      extract three dimensional coordinates corresponding to the target calibration object;
      based on the three dimensional coordinates corresponding to the target calibration object, determine which of the points of the point cloud are located within an environment associated with the image; and
      remove, from the point cloud, points that are not within the environment associated with the image.
13. The system of clause 11, wherein the device comprises a spinning light detection and ranging unit.
14. The system of clause 11, wherein the instructions further cause the at least one processor to:
   determine a reflectivity associated with the plurality of returns; and
   based on determining that the reflectivity is below a threshold reflectivity, select a strongest return of the plurality of returns having a highest intensity of the plurality of returns,
   wherein the subset of the plurality of points removed from the point cloud includes points of the plurality of points not associated with the strongest return.
15. The system of clause 11, wherein the instructions further cause the at least one processor to:
   determine a reflectivity associated with the plurality of returns; and
   based on determining that the reflectivity is above a threshold reflectivity, select a latest return of the plurality of returns having a latest timestamp of the plurality of returns,
   wherein the subset of the plurality of points removed from the point cloud include points of the plurality of points not associated with the latest return.
16. The system of clause 11, wherein the instructions further cause the at least one processor to:
   select a strongest return having a highest intensity of the plurality of returns and a latest return having a latest timestamp of the plurality of returns; and
   determine that a distance between a first point associated with the strongest return and a second point associated with the latest return is above a threshold distance,
   wherein the subset of the plurality of points removed from the point cloud includes the first point or the second point based on the determination of the distance.
17. A non-transitory computer-readable medium storing instructions that when executed by a processor, cause the processor to:
   produce a point cloud comprising a plurality of points associated with a plurality of returns of a single light pulse; and
   generate a reduced point cloud by removing a subset of the plurality of points from the point cloud.
18. The non-transitory computer-readable medium of clause 17, wherein the subset of the plurality of points removed from the point cloud is selected based on an intensity of each of the plurality of returns associated with the subset of the plurality of points.
19. The non-transitory computer-readable medium of clause 17, wherein the subset of the plurality of points removed from the point cloud is selected based on a timestamp of each of the plurality of returns associated with the subset of the plurality of points.
20. The non-transitory computer-readable medium of clause 17, wherein the processor is further caused to:
   identify a group of points of the plurality of points within a threshold distance from each other, the threshold distance based on a spatial resolution of the light pulse,
   wherein the only one point of the group of points is included in the reduced point cloud.

## Claims

1. A method for detecting an object in an environment, the method comprising:
transmitting a light pulse into an environment;
detecting a plurality of returns of the light pulse;
producing a point cloud comprising a plurality of points associated with the plurality of returns; and
generating a reduced set of points associated with the plurality of returns by removing a subset of the plurality of points from the point cloud.

2. The method of claim 1, further comprising detecting an object in the environment based on the reduced set of points

3. The method of claim 1 or 2, wherein the removing the subset of the plurality of points comprises:
selecting a strongest return of the plurality of returns having a highest intensity of the plurality of returns; and
removing, from the point cloud, points of the plurality of points not associated with the strongest return.

4. The method of any preceding claim, wherein the removing the subset of the plurality of points comprises:
selecting a latest return of the plurality of returns having a latest timestamp of the plurality of returns; and
removing, from the point cloud, points of the plurality of points not associated with the latest return.

5. The method of any preceding claim, wherein the removing the subset of the plurality of points comprises:
selecting pairs of points of the plurality of points that are within a threshold distance from each other; and
removing, from the point cloud, one point of each of the selected pairs of points.

6. The method of any preceding claim, further comprising:
capturing, by a camera, an image;
determining whether any points of the point cloud are located within an environment associated with the image; and
removing, from the point cloud, points of the point cloud that are not within the environment associated with the image.

7. The method of claim 6, wherein the image comprises a two dimensional image, and the method further comprises:
generating a mapping between a three dimensional set of target points and the two dimensional image,
wherein the determining that any points of the point cloud within the environment associated with the image includes:
projecting the points of the point cloud into the two dimensional image based on a mapping between the three dimensional set of target points and the two dimensional image.

8. The method of claim 6 or 7, wherein the determining that any points of the point cloud are within the environment associated with the image comprises:
determining, based on an angle associated with each of the points of the point cloud, the points of the point cloud are within a field of view of the camera.

9. The method of any of claims 6 to 8, wherein the camera comprises a front-facing camera of an autonomous vehicle, and plurality of returns are detected by a light detector, the light detector optionally comprising a light detection and ranging (LIDAR) unit.

10. A system for detecting an object in an environment, the system comprising:
a computer including at least one processor and a memory storing instructions that when executed by the at least one processor, cause the at least one processor to perform the method of any of claims 1 to 5; and
a device configured to transmit the light pulse and receive the plurality of returns of the light pulse.

11. The system of claim 10, further comprising:
a target calibration object; and
a camera configured to obtain an image including the target calibration object,
wherein the instructions further cause the at least one processor to:
capture the image including the target calibration object;
extract three dimensional coordinates corresponding to the target calibration object;
based on the three dimensional coordinates corresponding to the target calibration object, determine which of the points of the point cloud are located within an environment associated with the image; and
remove, from the point cloud, points that are not within the environment associated with the image.

12. The system of claim 10 or 11, wherein the instructions further cause the at least one processor to:
determine a reflectivity associated with the plurality of returns, and one of:
(a) based on determining that the reflectivity is below a threshold reflectivity, select a strongest return of the plurality of returns having a highest intensity of the plurality of returns, wherein the subset of the plurality of points removed from the point cloud includes points of the plurality of points not associated with the strongest return, or
(b) based on determining that the reflectivity is above a threshold reflectivity, select a latest return of the plurality of returns having a latest timestamp of the plurality of returns, wherein the subset of the plurality of points removed from the point cloud include points of the plurality of points not associated with the latest return.

13. A computer-readable medium storing instructions that when executed by a processor, cause the processor to:
produce a point cloud comprising a plurality of points associated with a plurality of returns of a single light pulse;
generate a reduced set of points associated with the plurality of returns by removing a subset of the plurality of points from the point cloud.

14. A computer program including instructions for performing a method according to any of claims 1 to 9, when run on a data processing system.

15. A computer-readable medium including the computer program of claim 14.
